# EUROPÄISCHE PATENTSCHRIFT

(11) **EP 1 029 831 B1**
(45) Veröffentlichungstag und Bekanntmachung des Hinweises auf die Patenterteilung: **02.07.2003**
(21) Anmeldenummer: 00100898.6
(22) Anmeldetag: 18.01.2000
(51) Int. Cl.: C03C 17/32, C03C 17/34

(54) **Verfahren zum Schützen der Oberfläche von Glassubstraten**
Method for protecting glass substrate surfaces
Méthode de protection de surfaces de substrats en verre

(30) Priorität: 16.02.1999 DE 19906333
(43) Veröffentlichungstag der Anmeldung: 23.08.2000
(73) Patentinhaber: Schott Glas, 55122 Mainz (DE); CARL-ZEISS-STIFTUNG trading as SCHOTT GLAS, 55122 Mainz (DE)
(72) Erfinder: Weber, Andreas, Dr., 31139 Hildesheim (DE); Mauch, Reiner, Dr., 55128 Ingelheim (DE); Bürkle, Roland, Dr., 55268 Nieder-Olm (DE); Berndt, Andreas, Dr., 26121 Oldenburg (DE); Schlatterbeck, Dirk, Dr., 55118 Mainz (DE); Walther, Marten, Dr., 55270 Engelstadt (DE); Henze, Inka Dr., 55288 Udenheim (DE)
(74) Vertreter: Fuchs Mehler Weiss & Fritzsche

(56) Entgegenhaltungen:
- FR-A- 2 543 514
- US-A- 4 053 666
- US-A- 5 550 182
- PATENT ABSTRACTS OF JAPAN vol. 008, no. 118 (C-226), 31. Mai 1984 (1984-05-31) & JP 59 030735 A (BURANETSUTO KAGAKU KENKYUSHO:KK;OTHERS: 02), 18. Februar 1984 (1984-02-18)
- PATENT ABSTRACTS OF JAPAN vol. 1998, no. 113, 30. November 1998 (1998-11-30) & JP 10 226537 A (NIPPON ELECTRIC GLASS CO LTD), 25. August 1998 (1998-08-25)

## Beschreibung

Die Erfindung betrifft Verfahren zum Anbringen von wiederablösbaren, mindestens einschichtigen Beschichtungen aus Polymeren auf Glassubstraten, insbesondere Displaygläser und Festplattensubstrate, als Schutzschicht.

Ferner betrifft die Erfindung Displaygläser und ein Displayglas aufweisendes elektronisches Gerät.

Außerdem betrifft die Erfindung Festplattensubstrate aus Glas oder Glaskeramik. Die Festplattensubstrate sind auch unter der englischen Bezeichnung "hard disk blank" bekannt und bestehen aus Glas oder Glaskeramik.

Unter Glassubstrat werden Substrate aus herkömmlichen Glas sowie Substrate aus Glaskeramik verstanden. Bei der Herstellung von Glassubstraten, insbesondere für Displaygläser und Festplattensubstrate aus Glas oder Glaskeramik, kommt es zu massiven Ausbeuteproblemen, da die Glassubstrate infolge von Bearbeitung und Transport Defekte in Form von Kratzern und Partikeln aufweisen. Diese Kratzer können außerdem Glasbruch induzieren, der sich verheerend auswirkt, wenn er während eines Prozeßschrittes auftritt, da der Prozeß unterbrochen werden muß, um die Maschinen von jeglichen Splittern zu reinigen, die sonst weitere Kratzer verursachen würden.

Beim Ritzen und Ablängen werden Glaspartikel frei, die sich auf die Glasoberfläche legen und dort als abrasive Partikel während des weiteren Transports und der Bearbeitung zu Kratzern auf der Oberfläche führen. Auch die nach der Vereinzelung der Substrate erfolgende Kantenbearbeitung führt zur Belastung der Glasoberfläche mit Glaspartikeln, die wiederum als Abrasivkörper wirken. Außerdem wird bei der Kantenbearbeitung zum Kühlen und zum Abtransport von Schleiflösung ein Hochdruckwasserstrahl auf die Kanten gerichtet.

Bekannt sind Verfahren, bei denen beidseitig Polymerfolie auflaminiert wird. Derartige Verfahren haben mehrere Nachteile. Die Schutzfolie kann erst nach dem Zuschneiden des Glases appliziert werden und kann daher nur während des Transports und bei der Kantenbearbeitung schützen. Bei der Kantenbearbeitung passiert es, daß die Folie sich an den Kanten teilweise abhebt und sich darunter Schleifschlamm ansammelt und das Glas beschädigt wird. Außerdem tritt insbesondere bei dünnem Glas infolge der notwendigen Abzugskraft zur Entfernung der Folie vermehrt Glasbruch auf.

Für das Auflaminieren der Polymerschutzfolie werden Klebstoffe benötigt, die sich nicht immer rückstandsfrei entfernen lassen. Die Glasoberfläche muß also unter Umständen nachpoliert werden, um die erforderliche Güte zu erhalten. Das Nachpolieren geschieht hauptsächlich mechanisch und entfernt zwar die Klebstoffrückstände, führt aber auf mikroskopischer Ebene nicht zu optimaler Oberflächengüte, wie sie z.B. für Displaygläser und optische Spezialgläser oder auch Festplattensubstrate erwünscht wäre, da durch den Poliervorgang winzige Kratzer erzeugt werden. Ein gravierender Nachteil ist auch der hohe Ausschuß durch Glasbruch beim Polieren.

Aus der Offenlegungsschrift DE 36 15 277 A1 ist ein Verfahren bekannt, mit dem Flachglas mit einem kratzfesten Splitterschutzüberzug versehen wird. Unmittelbar nach der Herstellung wird innerhalb der Kühlstrecke Kunststoffpulver aufgetragen, das auf dem Glasband aufschmilzt. Zur Erhöhung der mechanischen Stabilität werden eine Grundschicht und eine kratzfestere Deckschicht aufgebracht. Die auf diese Weise hergestellte Splitterschutzschicht läßt sich nicht wieder entfernen. Zudem erhält man keine Oberflächengüte, die für Displays hinreichend ist. Eine Verwendung als Festplattensubstrat ist wegen der Kunststoffschicht nicht möglich.

Die Offenlegungsschrift JP-H10226537 beschreibt ein Verfahren, bei dem ein wasserlöslicher Schutzfilm aufgetragen wird, der das Glas nicht angreift (also keine Alkalisalze enthält) und gegen Feuchtigkeit resistent ist. Für den Schutzfilm werden Polyvinylalkohollösungen in Wasser verwendet, wobei die Polyvinylalkohole eine mittlere Molekülmasse von höchstens 51.600 g/mol, vorzugsweise unter 25.800 g/mol, haben und teilweise hydrolisiert sind, vorzugsweise zwischen 55% und 85%. Begründet werden die oberen Grenzen damit, daß bei höheren mittleren Molekülmassen sowie bei Hydrolysegraden ab etwa 95% die Wasserlöslichkeit drastisch abnehme. Bei geringeren Hydrolysegraden hingegen nehme die Wasserlöslichkeit mit dem Hydrolysegrad zu. Dieser Schutzfilm aus Polyvinylalkohol mit einer mittleren Molekülmasse von weniger als ca. 50.000 g/mol und einem Hydrolysegrad zwischen 55% und 85% ist schon ab 30°C sehr gut wasserlöslich. Ein derartiger Polyvinylalkoholschutzfilm löst sich bei der Kantenbearbeitung in kürzester Zeit auf.

Aus der Patentschrift BE 714347 ist ein weiteres Verfahren auf der Basis eines wasserlöslichen Polymerschutzfilms bekannt. In diesem Verfahren handelt es sich um eine Mischung aus Hydroxylethylzellulose und Dialdehyd in Wasser oder aus Polyvinylalkohol und Dialdehyd in Wasser. Der Dialdehyd hat die Wirkung eines Vernetzers, der den Schutzfilm quellbar macht und die Haftung des Schutzfilms auf dem Glas verringert. Durch die Beimischung eines Dialdehyds wird die Wasserlöslichkeit der Polymerschutzschicht eingestellt. Über den Polymerisationsgrad der bevorzugten Polyvinylalkohole wird keine Aussage gemacht. Der Hydrolysegrad sollte bei 85% oder höher liegen. Es hat sich jedoch gezeigt, daß Schutzfilme aus solchen Polymeren sich bei der Kantenbearbeitung ablösen.

Die US 4,053,666 beschreibt einen beschichteten Glasbehälter sowie ein Verfahren zum Aufbringen einer Schutzschicht auf Glasbehälter, wobei mit Glasbehälter aus Glas gefertigte Gegenstände, wie beispielsweise Gefäße, Flaschen oder Trinkgläser gemeint sind. Als Beschichtungsmaterial werden thermoplastische, organische Polymere vorgeschlagen. Die mindestens 50,8 µm dicke Schutzschicht wird dabei auf den abgekühlten Glasbehälter aufgebracht, um diesen hinsichtlich der Kratz- und Bruchfestigkeit unempfindlicher zu machen und gleichzeitig den Glasbehälter dekorativ auszugestalten. Ein Entfernen der Schutzschicht ist für den Recycling-Fall durch Waschen mit einem wasserhaltigen Medium vorgesehen, derart, daß die mit einem ausreichenden Molekulargewicht und einer ausreichenden Dicke ausgebildete Schutzschicht als fester, flexibler, selbsttragender Film abgezogen und ebenfalls recycelt werden kann.

Ein Aufbringen einer solchen Schutzschicht auf Glassubstrate, insbesondere Displaygläser und Festplattensubstrate, ist jedoch wenig sinnvoll, da die hohen auf das Glassubstrat wirkenden Biegekräfte beim Abziehen der Schutzschicht dazu führen, daß die im Verhältnis zu Flaschen oder Trinkgläsern deutlich dünneren Glassubstrate durch die Biegekräfte zerstört werden und es zu einer hohen Ausschußrate kommt.

In der FR 2 543 514 wird eine Schutzschicht und ein Verfahren zum Aufbringen einer Schutzschicht beschrieben. Die Schutzschicht umfaßt ein wasserlösliches, filmbildendes Polymer, welches ausschließlich mit gewöhnlichen Waschverfahren entfernt werden soll. Die üblichen Waschverfahren vermindern jedoch die Oberflächenqualität, die bei den Glassubstraten, insbesondere bei Displaygläsern und Festplattensubstraten, besonders hoch sein muß.

Aufgabe der Erfindung ist es, ein Verfahren bereitzustellen, mit dem die Oberfläche von Glassubstraten von der Herstellung bis zur Endstufe der Bearbeitung, insbesondere der nassen Kantenbearbeitung, und bei allen dazwischenliegenden Transporten vor einem Zerkratzen und Abrasivkörpern geschützt wird, das mit möglichst wenigen Prozeßschritten auskommt, mit dem der Ausschuß minimiert wird und die höchstmögliche Oberflächengüte des Endproduktes gewährleistet.

Es ist auch Aufgabe der Erfindung, ein Displayglas zu finden, das bei geringen Herstellungskosten eine exzellente Oberflächengüte aufweist, bzw. ein elektronisches Gerät, das ein derartiges Displayglas aufweist.

Außerdem ist es Aufgabe der Erfindung, ein Festplattensubstrat zu finden, das bei geringen Herstellungskosten eine exzellente Oberflächengüte aufweist, bzw. eine Verwendungsmöglichkeit derartiger Festplattensubstrate zu finden.

Die Aufgaben werden erfindungsgemäß durch die Verfahren gemäß den Patentansprüchen 1 und 7 sowie durch ein Displayglas mit den Merkmalen des Patentanspruches 25 und ein elektronisches Gerät mit den Merkmalen des Patentanspruches 26 sowie durch Festplattensubstrate mit den Merkmalen der Patentansprüche 27 und 28 und die Verwendung der Festplattensubstrate gemäß Patentanspruch 29 gelöst.

Bei dem ersten Verfahren wird mindestens eine Schicht aus Polyvinylalkohol auf das Glassubstrat aufgebracht. Der Polyvinylalkohol hat eine mittlere Molekülmasse ≥ 55.000 g/mol und einem Hydrolysegrad ≥ 95%. Die so entstehende mindestens eine wiederablösbare Schicht ist nur schwer kaltwasserlöslich und widersteht daher der nassen Kantenbearbeitung. Je nach Bedarf wird dabei das Glassubstrat beidseitig oder nur einseitig beschichtet.

Die Beschichtung läßt sich durch Waschen mit Wasser mit einer Temperatur von 50° C und höher, insbesondere 60° C und höher, bevorzugt 70° C und höher und besonders bevorzugt 80% C und höher, entfernen. Je höher die Wassertemperatur desto schneller läßt sich die Beschichtung entfernen. Der pH-Wert ist dabei in den Grenzen der Glasbeständigkeit beliebig einstellbar. Sowohl ein saurer als auch ein basischer pH-Wert ist zur schnellen Entfernung der Beschichtung geeignet.

Durch die mindestens eine Polyvinylalkoholschicht wird die ursprüngliche Oberflächengüte der Glassubstratoberfläche durch den gesamten Bearbeitsprozeß hindurch und bei möglichen Transporten bewahrt. Das Entfernen durch Waschen mit Wasser der mindestens einen Polyvinylalkoholschicht ist einerseits sehr schonend, so daß selbst bei sehr dünnen Gläsern der Glasbruch gering ausfällt und andererseits sehr gründlich, da die mindestens eine Polymerschicht vollständig entfernt wird.

Durch ein zusätzliches Nachpolieren würde die Oberflächengüte durch mikroskopische Kratzer verringert werden und der Ausschuß durch Glasbruch erhöht werden. Das Nachpolieren entfällt daher bei nach dem erfindungsgemäßen Verfahren hergestellten Gläsern.

Es hat sich als vorteilhaft herausgestellt, für die Beschichtung Polyvinylalkohole mit mittleren Molekülgewichten ≥ 100.000 g/mol, besonders bevorzugt ≥ 150.000 g/mol, zu verwenden.

Ebenso hat sich als vorteilhaft erwiesen, Polyvinylalkohole mit Hydrolysegraden ≥ 97,5 zu verwenden.

Die Wasserlöslichkeit bei Zimmertemperatur von Polyvinylalkohol mit hohen mittleren Molekülmassen und sehr hohem Hydrolysegrad ist zwar extrem schlecht (quasi unlöslich), die Wasserlöslichkeit bei hohen Temperaturen hingegen ist sehr gut. Dadurch eignen sich diese sehr hochpolymersierten Polyvinylalkohole ausgezeichnet dazu, die Glassubstratoberfläche auch bei dem Bearbeitungsschritt der nassen Kantenbearbeitung zu schützen, bei dem zum Kühlen und Abtransport der Schleiflösung in kalter (d.h.Umgebungs-temperatur) Hochdruckwasserstrahl auf die Kante gerichtet wird.

Verfahrenstechnisch vorteilhaft ist es, zum Aufbringen des Polyvinylalkohols wäßrige Lösungen von 1 bis 30 Gew.-%, insbesondere 1 bis 20 Gew.-%, besonders bevorzugt 5 bis 10 Gew.-%, zu verwenden.

Vorzugsweise wird die Dicke der mindestens einen Polymerschicht zwischen 0,1 bis 100 µm eingestellt. Als besonders vorteilhaft haben sich Schichtdicken von 1 bis 15 µm erwiesen.

Bei dem zweiten Verfahren wird mindestens eine Schicht aus einem Polymer auf das Glassubstrat aufgebracht, das in polaren organischen Lösungsmitteln lösbar ist. Bevorzugt werden dabei polare organische Lösungsmittel, wie Alkohole, Ketone oder Ester, die zu geringen Preisen in großen Mengen handelsüblich sind. Bei dem Polymer für die Beschichtung handelt es sich vorteilhafterweise um Polyacrylat oder Polyvinylpyrrolidon/Polyvinylacetat-Copolymer oder Polyvinylcaprolactam.

Die Polymerbeschichtung wird vorzugsweise mit einem Alkohol, einem Keton oder einem Ester bzw. einer wäßrigen Lösung eines dieser organischen Lösungsmittel wieder entfernt. Besonders bevorzugt werden dabei Isopropanol oder Ethanol oder wäßrige Lösungen derselben.

Durch die mindestens eine Polymerschicht wird wie auch bei der Polyvinylalkoholbeschichtung die ursprüngliche Oberflächengüte der Glassubstratoberfläche durch den gesamten Bearbeitungsprozeß hindurch und bei möglichen Transporten bewahrt. Das Entfernen durch Waschen mit organischen Lösungsmitteln oder wäßrigen Lösungen derselben der mindestens einen Polymerschicht ist einerseits sehr schonend, so daß selbst bei sehr dünnen Gläsern der Glasbruch gering ausfällt, und andererseits sehr gründlich, da die mindestens eine Polymerschicht vollständig entfernt wird.

Auch in diesem Verfahren würde durch ein zusätzliches Nachpolieren die Oberflächengüte durch mikroskopische Kratzer verringert werden und der Ausschuß durch Glasbruch erhöht werden. Das Nachpolieren entfällt daher bei nach dem erfindungsgemäßen Verfahren hergestellten Gläsern.

Bei beiden Verfahren wird die mindestens eine Polymerschicht vorzugsweise direkt nach der Herstellung des Glassubstrates auf dasselbe aufgebracht, um die Oberflächengüte der Herstellung zu konservieren, bevor noch irgendwelche Abrasiv- oder Schmutzpartikel diese mindern können. Das Aufbringen kann dazu direkt am Glaszug stattfinden.

Bezüglich des Aufbringens gibt es diverse Möglichkeiten. Drei bevorzugte Aufbringverfahren sind das Tauchen, das Walzen und das Sprühen. Das Tauchen eignet sich für Gläser, die bereits angeschnitten sind. Das Walzen ist besonders gut für dicke Scheiben geeignet. Das Sprühen hingegen wird vorzugsweise für dünne Schichten angewendet und speziell für Gläser, die höchste Oberflächengüte aufweisen sollen und daher noch am Glaszug beschichtet werden. Zudem geschieht das Sprühen berührungslos, so daß die Kontamination der Glassubstratoberfläche möglichst gering gehalten wird. Vorteilhafterweise wird dazu das High Volumen Low Pressure (HVLP)-Verfahren verwendet, um möglichst homogene Filme zu erhalten und den Overspray, d.h. den überschüssigen Sprühnebel, möglichst gering zu halten.

Sofern das Glasband nicht im warmen Zustand (z.B. 90° C) beschichtet wird, muß der Trocknungsprozeß unterstützt werden. Hierzu kann einerseits die Infrarotstrahlung, andererseits Heißluft eingesetzt werden. Beiden Verfahren ist gemeinsam, daß das Glas auf eine Temperatur von ca. 150° C aufgeheizt wird. Höhere Temperaturen können zu einer Modifikation der Schutzschicht bzw. des Glases führen. Geringere Temperaturen verringern die Trocknungsgeschwindigkeit.

Beim Infrarottrocknen wird das Glas mittels Strahlung erwärmt. Als besonders geeignet hat sich insbesondere Strahlung im Wellenlängenbereich zwischen 3 und 10µm erwiesen, wie diese z.B. von Gasdunkelstrahlern erzeugt wird. Alternativ ist auch der Einsatz von elektrischen Heizstrahlern möglich.

Beim Heißlufttrocknen wird das Glasband beiseitig mit heißer Luft beaufschlagt. Die Anlage kann auch als Schwebetrockner ausgeführt werden, so daß das Glasband durch die Luftströmung in der Schwebe gehalten wird und den Trockner daher berührungslos durchfährt.

Soll die Beschichtung in kürzester Zeit wieder entfernt werden, bietet es sich als vorteilhaft an, das Waschen mit Ultraschall zu unterstützen. Dabei pflanzen sich die Schallwellen in der Waschflüssigkeit fort und lösen die Beschichtung mechanisch ab.

In einer bevorzugten Ausführungsform wird genau eine Polymerschicht auf die schützende Glassubstratoberfläche aufgebracht, die je nach Verfahren auf der Basis von Polyvinylalkoholen ist oder von einem Polymer, das in einem polaren organischen Lösungsmittel löslich ist. Dadurch wird der Aufwand und damit auch die Kosten für diesen Prozeßschritt gering gehalten.

In besonderen Fällen, in denen die Anforderungen an die Schutzbeschichtung hoch sind, werden vorteilhafterweise mindestens zwei Polymerschichten aufgebracht, die sich in ihrer Löslichkeit dahingehend unterscheiden, daß die direkt auf dem Glassubstrat aufgetragene Schicht löslicher als die darüberliegende ist.

In einer bevorzugten Ausführung wird auf das Glassubstrat erst eine Schicht auf Polyvinylalkoholbasis aufgetragen und darüber eine Schicht aus beispielsweise Polyacrylat. Dies hat den Vorteil, daß die Oberflächenbeschichtung gegen Wasser und Feuchtigkeit sehr resistent ist, aber sowohl für das Auftragen wie auch für das Abwaschen der Beschichtung bedeutend weniger organische Lösungsmittel benötigt werden, als wenn man eine gleichdicke Schicht nur aus Polyacrylat oder einem ähnlichen wasserunlöslichen Polymer hätte und somit die Umwelt geringer belastet wird.

Die Erfindung erstreckt sich auch auf Displaygläser, die zu keinem Zeitpunkt poliert worden sind, sowie elektronische Geräte, die mit eben solchem Displayglas ausgestattet sind. Außerdem erstreckt sich die Erfindung auf Displayglas, dessen Beschichtung mit polaren organischen Lösungsmitteln oder Wasser einer Temperatur ≥ 50° C oder wäßrigen Lösungen von polaren organischen Lösungsmitteln entfernt werden kann.

Die Erfindung erstreckt sich ferner auf Festplattensubstrate aus Glas oder Glaskeramik, die zu keinem Zeitpunkt poliert worden sind. Außerdem erstreckt sich die Erfindung auf Festplattensubstrate, dessen Beschichtung mit polaren organischen Lösungsmitteln oder Wasser einer Temperatur ≥ 50° C oder wäßrigen Lösungen von polaren organischen Lösungsmitteln entfernt werden kann. Ferner erstreckt sich die Erfindung auf die Verwendung derartiger Festplattensubstrate als Rohling für Festplatten zum Einsatz in elektronischen Geräten.

Zur Erläuterung folgt ein schematisches Beispiel für einen Prozeß der Displayglasherstellung und -bearbeitung mit integrierten erfindungsgemäßen Beschichtungsverfahren. Dieser Prozeß umfaßt die Schritte Glasheißfertigung, Sprühauftrag der Schutzschicht, Trocknung der Schutzschicht (illustriert durch Fig. 1), Zuschnitt, Verpackung (illustriert durch Fig. 2), Transport, Entpacken, Kantenbearbeitung (illustriert durch Fig. 3), Entschichtung (illustriert durch Fig. 4) und das Verpacken und Liefern der Displaygläser.

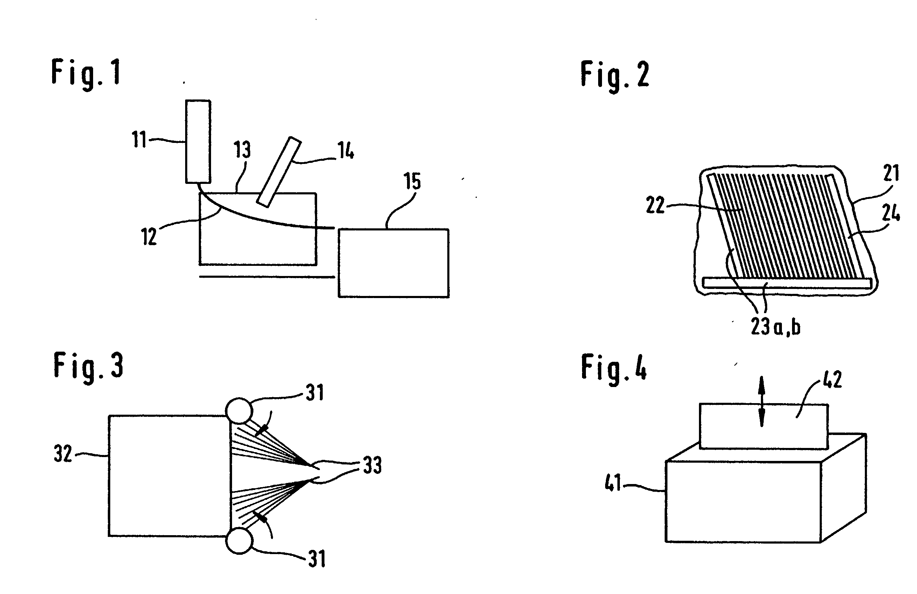

Wie in Fig. 1 dargestellt, wird erst das Glas selbst an einem Downdraw-Glaszug gefertigt. Dabei kommt das Glasband 12 vertikal nach unten aus dem Ziehschacht 11 heraus und wird sofort in einem Beschichtungsmodul 13 weitergeleitet, in dem das Glasband 12 durch Sprühen beschichtet wird und die aufgebrachte Schutzschicht auch sofort getrocknet wird. Während des Durchlaufes durch das Beschichtungsmodul 13 wird das Glasband 12 durch eine Umlenkeinheit 14 derart umgelenkt, daß das Glasband 12 horizontal aus dem Beschichtungsmodul 13 austritt und somit auf einem Auslegetisch 15 abgelegt werden kann.

Daraufhin folgt der Schritt des Schneidens, bei dem zum einen die fertigungsbedingten Borten abgeschnitten werden, zum anderen das Glasband in einzelne Platten geschnitten wird.

Die wie bisher beschrieben erhaltenen Glasscheiben 22 werden nun zwecks Transport an einen anderen Standort verpackt (s. Fig. 2). Dazu werden die einzelnen beschichteten Glasscheiben 22 auf zwei Grundplatten 23a, b gestapelt, eine Deckplatte 24 darübergelegt und der gesamte Stapel zum zusätzlichen Schutz gegen Feuchtigkeit und Schmutzpartikel in metallisierte LDPE (Low Density Polyethylen)-Folie 21 verpackt. zusätzlichen Schutz gegen Feuchtigkeit und Schmutzpartikel in metallisierte LDPE (Low Density Polyethylen)-Folie 21 verpackt.

Am Bestimmungsort angekommen, werden die Glasscheiben wieder ausgepackt und wie in Fig. 3 dargestellt, an den Kanten bearbeitet. Dazu wird jede beschichtete Glasscheibe 32 durch sich gegensinnig drehende Schleifräder 31 geführt. Zum Kühlen und Abtransportieren der Schleiflösung werden zwei Wasserstrahlen 33 auf die Kanten gerichtet, die gerade abgeschliffen werden. Das Schleifen an sich dient u.a. dem Stabilisieren der Glasscheibe 32 gegen Glasbruch und zur Erleichterung der Handhabung bei der Displayherstellung.

Vor dem Verpacken und Ausliefern wird die Glasscheibe 42 noch entschichtet (s. Fig. 4). Dazu wird sie in ein mit Flüssigkeit gefülltes Ultraschallbecken 41 getaucht, um die Schutzschicht von der nun fertigen Displayglasscheibe 42 abzuwaschen.

Analog zu obenstehendem Beispiel können auch Festplattensubstrate aus Glas hergestellt und bearbeitet werden. Auch die Oberflächengüte der Festplattensubstrate wird durch das erfindungsgemäße Beschichtungsverfahren sichergestellt.

Konkrete Beispiele zum erfindungsgemäßen Be- und Entschichten werden im folgenden vorgestellt:
Beispiel 1 Verwendung eines Polyvinylalkohols (MG=60.000 g/mol als Sprühlösung
Beispiel 2 Verwendung eines Polyvinylalkohols (MG=150.000 g/mol) als Sprühlösung
Beispiel 3 Verwendung einer Polyvinylcaprolactamlösung als Sprühlösung
Beispiel 4 Verwendung einer Polyvinylpyrrolidon-Polyvinylacetatcopolymer-Lösung als Sprühlösung
Beispiel 5 Verwendung einer organischen Polyacrylatlösung als Sprühlösung
Beispiel 6 Verwendung eines Polyvinylalkohols (MG=130.000 g/mol) als Walzlösung
Beispiel 7 Verwendung eines Polyvinylalkohols (MG=150.000 g/mol) als Walzlösung
Beispiel 8 Verwendung eines Polyvinylalkohols (MG=150.000 g/mol) als Tauchlösung

### 1. Verwendung eines Polyvinylalkohols (MG=60.000 g/mol) als Sprühlösung

Verwendet wird ein Polyvinylalkohol mit einer Molmasse von ca. 60.000 g/mol (auch in den folgenden Beispielen mit Gel-Permeation-Chromatographie gemessen) und einem Hydrolysegrad von 98%. Dieser besitzt in 4%iger wäßriger Lösung bei 20° C eine Viskosität von 10±1 mPa·s (wenn nicht anders angegeben, auch in den folgenden Beispielen mit Kugelfallsviskosimeter nach DIN 53015 gemessen). Für die Verarbeitung wird eine 10%ige Lösung eingesetzt. Diese wird folgendermaßen hergestellt. 1 Gewichtsanteil Polymerpulver wird in 9 Teile kaltes deionisiertes Wasser eingetragen. Die Suspension wird unter Rühren im Wasserbad auf >90°C bis zum vollständigen Lösen erwärmt. Nachdem sich alles gelöst hat, wird unter Rühren auf Raumtemperatur abgekühlt.

Die beiseitige Beschichtung auf AF 37 Glas (alkalifreies Displayglas mit thermischen Ausdehnungskoeffizienten von 37) der Dicke 0,4 mm erfolgt durch Versprühen der auf 70°C erwärmten Lösung nach dem HVLP-Verfahren mit 70°C warmer Luft direkt am kalten Ende des Downdraw-Glaszuges bei einer Ziehgeschwindigkeit von 1,5 m/min. Der Düsendurchmesser liegt bei 0,7 mm, der Druck der Zerstäuberluft bei 5,5 bar. Die Polymerlösung wird mit einem Druck von 0,5 bar der Düse zugeführt mit einem Durchfluß von 16 ml/min bei einer zu besprühenden Glasbandbreite von 1 m.

Getrocknet wird durch Heißluft, um eine schnelle Trocknung (> 60 s) zu erreichen. Bei diesem Trocknungsverfahren wird das Glasband beiseitig mit heißer Luft beaufschlagt. Die Trockneranlage kann auch als Schwebetrockner ausgeführt werden, so daß das Glasband durch die Luftströmung in der Schwebe gehalten wird und den Trockner daher berührungslos durchfährt. Die Schichtdicke beträgt zwischen 5 und 6 µm. In der Kantenbearbeitung werden die Scheiben mehrere Minuten lang kaltem Wasser ausgesetzt, das im Kantenbereich mit einem Strahl von ca. 2 bar Druck auf die Scheibe gelangt und die ganze Oberfläche überspült. Die Entschichtung erfolgt durch Waschen der Scheibe direkt nach der Kantenbearbeitung in heißem deionisiertem Wasser (5 min, 80°C, Ultraschallunterstützung).

### 2. Verwendung eines Polyvinylalkohols (MG=150.000 g/mol) als Sprühlösung

Verwendet wird ein Polyvinylalkohol mit einer Molmasse von ca. 150.000 g/mol und einem Hydroysegrad von 99%. Dieser besitzt in 4%iger wäßriger Lösung bei 20°C eine Viskosistät von 28 ± 1 mPa·s. Für die Verarbeitung wird eine 5%ige Lösung eingesetzt. Diese wird folgendermaßen hergestellt. 1 Gewichtsanteil Polymerpulver wird in 19 Teile kaltes deionisiertes Wasser eingetragen. Die Suspension wird unter Rühren im Wasserbad auf >90°C bis zum vollständigen Lösen erwärmt. Nachdem sich alles gelöst hat, wird unter Rühren auf Raumtemperatur abgekühlt.

Die beidseitige Beschichtung auf AF 37 Glas (Dicke 0,7 mm) erfolgt durch Versprühen der auf 70° erwärmten Lösung nach dem HVLP-Verfahren mit 70°C warmer Luft direkt am kalten Ende des Downdraw-Glaszuges bei einer Ziehgeschwindigkeit von 1,5 m/min. Der Düsendurchmesser liegt bei 0,9 mm, der Druck der Zerstäuberluft bei 5,5 bar. Die Polymerlösung wird mit einem Druck von 0,4 bar der Düse zugeführt mit einem Durchfluß von 16 ml/min bei einer zu besprühenden Glasbandbreite von 1 m.

Getrocknet wird durch die Bestrahlung mit Gasinfrarot-Strahlern, um eine schnelle Trocknung (<60 s) zu erreichen. Hierbei wird das Glas mittels Strahlung erwärmt. Als besonders geeignet hat sich insbesondere Strahlung im Wellenlängenbereich zwischen 3 und 10 µm erwiesen, wie er z.B. von Gasdunkelstrahlern erzeugt wird. Alternativ ist auch der Einsatz von elektrischen Strahlern möglich. Die Schichtdicke beträgt zwischen 5 und 6 µm. In der Kantenbearbeitung werden die Scheiben mehrere Minuten lang kaltem Wasser ausgesetzt, das im Kantenbereich mit einem Strahl von ca. 2 bar Druck auf die Scheibe gelangt und die ganze Oberfläche überspült, wobei die Schicht vollständig erhalten bleibt. Die Entschichtung erfolgt durch Waschen der Scheibe in wäßrigen Medien direkt nach der Kantenbearbeitung in heißem deionisiertes Wasser mit pH = 5, eingestellt mit Zitronensäure (5 min, 60°C, Ultraschall-Unterstützung).

### 3. Verwendung einer Polyvinylcaprolactamlösung als Sprühlösung

Verwendet wird eine 20%ige Polyvinylcaprolactamlösung in Ethanol. Die mittlere Molmasse des Polyacrylats beträgt ca. 100.000 g/mol. Die Viskosität einer 20%igen Lösung beträgt 50 bis 120 mPa·s (Brookfield LVT bei 23°C und 60 Upm). Die beidseitige Beschichtung des AF 37 Glases (Dicke 0,8 mm) erfolgt durch Versprühen der Lösung bei Raumtemperatur nach dem HVLP-Verfahren direkt am kalten Ende des Downdraw-Glaszuges bei einer Ziehgeschwindigkeit von 1,5 m/min. Die beidseitige Beschichtung auf AF 37 Glas (Dicke 0,4 mm) erfolgt durch Versprühen der auf 40°C erwärmten Lösung nach dem HVLP-Verfahren mit 40°C warmer Luft direkt am kalten Ende des Downdraw-Glaszuges bei einer Ziehgeschwindigkeit von 1,5 m/min. Der Düsendurchmesser liegt bei 0,7 mm der Druck der Zerstäuberluft bei 5,0 bar. Die Polymerlösung wird mit einem Druck von 0,45 bar der Düse zugeführt mit einem Durchlaß von 18 ml/min bei einer zu besprühenden Glasbandbreite von 1 m.

Die Trocknung erfolgt im Luftstrom innerhalb von 30 s. Die Schichtdicke beträgt zwischen 5 und 6 µm.

In der Kantenbearbeitung werden die Scheiben mehrere Minuten lang kaltem Wasser ausgesetzt, das im Kantenbereich mit einem Strahl von ca. 2 bar Druck auf die Scheibe gelangt und die ganze Oberfläche überspült. Die Schutzschicht wird leicht angelöst, bleibt ansonsten aber unbeeinflußt.

Die Entschichtung erfolgt durch Waschen der Scheibe in einem Gemisch von Ethanol/Wasser im Volumenverhältnis 7:3 bei 40°C mit Ultraschallunterstützung bei einer Dauer von 8 min.

### 4. Verwendung einer Polyvinylpyrrolidon-Polyvinylacetatcopolymer-Lösung als Sprühlösung

Verwendet wird eine 20%ige Lösung eines Copolymers aus Polyvinylpyrrolidon/Polyvinylacetat (3:7, Viskosität ca. 55 mP·s bei 23°C) in Isopropanol. Die beidseitige Beschichtung des AF 37 Glases (Dicke 0,8 mm) erfolgt durch Versprühen der Lösung bei Raumtemperatur nach dem HVLP-Verfahren direkt am kalten Ende des Downdraw-Glaszuges bei einer Ziehgeschwindigkeit von 1,5 m/min. Der Durchmesser der Sprühdüse liegt bei 0,7 mm, der Druck der Zerstäuberluft bei 6 bar. Die Polymerlösung wird mit einem Druck von 0,4 bar der Düse zugeführt mit einem Durchfluß von 18 ml/min bei einer zu besprühenden Glasbandbreite von 1 m.

Die Trocknung erfolgt im Luftstrom innerhalb von 30 s. Die Schichtdicke beträgt zwischen 5 und 6 µm.

In der Kantenbearbeitung werden die Scheiben mehrere Minuten lang kaltem Wasser ausgesetzt, das im Kantenbereich mit einem Strahl von ca. 2 bar Druck auf die Scheibe gelangt und die ganze Oberfläche überspült. Die Schutzschicht bleibt unbeeinflußt.

Die Entschichtung erfolgt durch Waschen der Scheibe in einem Gemisch aus gleichen Teilen Isopropanol und Wasser bei 30°C mit Ultraschallunterstützung bei einer Dauer von 5 min.

### 5. Verwendung einer organischen Polyacrylatlösung als Sprühlösung

Verwendet wird eine 35%ige Lösung in Polyacrylatlösung in Ethanol. Die Lösung besitzt bei 23°C eine Auslaufzeit von 12 s (DIN 53211). Die beidseitige Beschichtung des AF Glases (Dicke 0,8 mm) erfolgt durch Versprühen der Lösung bei Raumtemperaur nach dem HVLP-Verfahren direkt am kalten Ende des Downdraw-Glaszuges bei einer Ziehgeschwindigkeit von 1,5 m/min. Der Durchmesser der Sprühdüse liegt bei 0,43 mm, der Druck der Zerstäuberluft bei 5 bar. Die Polymerlösung wird mit einem Druck von 0,3 bar der Düse zugeführt mit einem Durchfluß von 12 ml/min bei einer zu besprühenden Glasbandbeite von 1 m.

Die Trocknung erfolgt im Luftstrom innerhalb von 20 s. Die Schichtdicke beträgt zwischen 5 und 6 µm.

In der Kantenbearbeitung werden die Scheiben mehrere Minuten lang kaltem Wasser ausgesetzt, das im Kantenbereich mit einem Strahl von ca. 2 bar Druck auf die Scheibe gelangt und die ganze Oberfläche überspült. Die Schutzschicht bleibt unbeeinflußt.

Die Entschichtung erfolgt durch Waschen der Scheibe in Isopropanol bei 50°C mit Ultraschallunterstützung bei einer Dauer von 3 min.

### 6. Verwendung eines Polyvinylalkohols (MG=130.000 g/mol) als Walzlösung

Verwendet wird ein Polyvinylalkohol mit einer Molmasse von ca. 130.000 g/mol in einem Hydrolysegrad von 97%. Dieser besitzt in 4%iger wäßriger Lösung bei 20°C eine Viskosität von 18 ± 1 mpa·s. Für die Verarbeitung wird eine 20%ige Lösung eingesetzt. Diese wird folgendermaßen hergestellt. 1 Gewichtsanteil Polymerpulver wird in 4 Teile kaltes deionisiertes Wasser eingetragen. Die Suspension wird unter Rühren im Wasserbad auf >90°C bis zum vollständigen Lösen erwärmt. Nachdem sich alles gelöst hat, wird unter Rühren auf Raumtemperatur abgekühlt.

Die beidseitige Beschichtung auf AF 37 Glas (Dicke 0,7 mm) erfolgt durch Walzen der kalten und damit hochviskosen Polymerlösung im Bereich zwischen den Borten bei einer zu beschichtenden Glasbandbreite von 1 m.

Getrocknet wir durch die Bestrahlung mit Gasinfrarot-Strahlern, um eine schnelle Trocknung (<60 s) zu erreichen. Die Schichtdicke beträgt zwischen 10 und 12 µm. Die Entschichtung erfolgt durch achtminütiges Waschen mit deionisiertem Wasser (pH = 13, eingestellt mit Tetramthylammoniumhydroxid (TMAH) bei einer Temperatur von 60°C).

### 7. Verwendung eines Polyvinylalkohols (MG=150.000 g/mol) als Walzlösung

Verwendet wird ein Polyvinylalkohol mit einer Molmasse von ca. 150.000 g/mol und einem Hydrolysegrad von 99%. Dieser besitzt in 4%iger wäßriger Lösung bei 20° eine Viskosität von 28 ± 1 pa·s. Für die Verarbeitung wird eine 10%ige Lösung eingesetzt. Diese wird folgendermaßen hergestellt. 1 Gewichtsanteil Polymerpulver wird in 9 Teile kaltes deionisiertes Wasser eingetragen. Die Suspension wird unter Rühren im Wasserbad auf >90°C bis zum vollständigen Lösen erwärmt. Nachdem sich alles gelöst hat, wird unter Rühren auf Raumtemperatur abgekühlt.

Die beidseitige Beschichtung auf AF 37 Glas (Dicke 0,7 m m) erfolgt durch Walzen der kalten und damit hochviskosen Polymerlösung im Bereich zwischen den Borten bei einer zu beschichtenden Glasbandbreit von 1 m.

Getrocknet wird durch die Bestrahlung mit Gasinfrarot-Strahlern, um eine schnelle Trocknung (<60 s) zu erreichen. Die Schichtdicke beträgt zwischen 8 und 10 µm. Die Entschichtung erfolgt durch Waschen (ca. 8 min) mit TMAH-Lösung (TMAH=Tetramethylammoniumhydroxid mit pH = 13 und einer Temperatur von 60°C.

### 8. Verwendung eines Polyvinylalkohols (MG=150.000 g/mol) als Tauchlösung

Verwendet wird ein Polyvinylalkohol mit einer Molmasse von ca. 150.000 g/mol und einem Hydrolysegrad von 99%. Dieser besitzt in 4%iger wäßriger Lösung bei 20°C eine Viskosität von 28± 1 mpa·s. Für die Verarbeitung wird eine 5%ige Lösung eingesetzt. Diese wird hergestellt durch die kalte Suspension von einem Teil Polymer mit 19 Teilen deionisiertem Wasser, die anschließend bis zur klaren Lösung bei 90°C unter Rühren geheizt wird. Zum Abkühlen auf Raumtemperatur wird weitergerührt.

Die beidseitige Beschichtung auf AF 37 Glas (Dicke 0,7 mm) erfolgt durch Tauchen der Glasscheiben in die kalte Polymerlösung, wodurch Schichtdicken im Bereich von 8 µm erzielt werden.

Getrocknet wird im IR-Ofen mit Infrarot-Dunkelstrahlern ca. 2 min bei einer Oberflächentemperatur der Strahlerfelder von ca. 250°C. Das Waschen erfolgt ultraschallgestützt in heißem deionisiertem Wasser bei 70°C.

### Bezugszeichenliste

- 11: Ziehschacht
- 12: Glasband
- 13: Beschichtungsmodul
- 14: Umlenkeinheit
- 15: Auslegetisch

- 21: metallisierte LDPe-Folie
- 22: Glasscheibe
- 23a,b: Grundplatte
- 24: Deckplatte

- 31: Schleifrad
- 32: Glasscheibe
- 33: Wasserstrahl
- 34: Wasser

- 41: Ultraschallbecken
- 42: Glasscheibe

## Patentansprüche

1. Verfahren zum Anbringen einer wiederablösbaren Beschichtung mit mindestens einer Schicht aus Polyvinylalkohol auf Glassubstrate, insbesondere Displaygläser oder Festplattensubstrate, als Schutzschicht, **dadurch gekennzeichnet, daß** Polyvinylalkohol mit einer mittleren Molekülmasse ≥ 55.000 g/mol und einem Hydrolysegrad ≥ 95% verwendet wird.

2. Verfahren nach Anspruch 1, **dadurch gekennzeichnet, daß** die Beschichtung mit Wasser einer Temperatur T ≥ 50°C wieder abgelöst wird.

3. Verfahren nach Anspruch 1 oder 2, **dadurch gekennzeichnet, daß** ein Polyvinylalkohol einer mittleren Molekülmasse ≥ 150.000 g/mol verwendet wird.

4. Verfahren nach einem der Ansprüche 1 bis 3, **dadurch gekennzeichnet, daß** ein Polyvinylalkohol mit einem Hydrolysegrad ≥ 97,5% verwendet wird.

5. Verfahren nach einem der Ansprüche 1 bis 4, **dadurch gekennzeichnet, daß** eine 1 bis 30%ige Polyvinylalkohollösung in Wasser verwendet wird.

6. Verfahren nach einem der Ansprüche 1 bis 5, **dadurch gekennzeichnet, daß** die mindestens eine Polymerschicht eine Dicke von 0,1 bis 100µm aufweist.

7. Verfahren zum Anbringen einer wiederablösbaren Beschichtung mit mindestens einer Schicht aus einem Polymer auf Displaygläsern oder Festplattensubstraten als Schutzschicht, **dadurch gekennzeichnet, daß** die Schutzschicht mit einer Dicke von 1 bis 15 µm aufgebracht wird, wobei für die Schutzschicht ein Polymer verwendet wird, das mittels polarer organischer Lösungsmittel wieder ablösbar ist.

8. Verfahren nach Anspruch 7, **dadurch gekennzeichnet, daß** ein Polymer verwendet wird, das in Alkoholen, Ketonen oder Estern lösbar ist.

9. Verfahren nach Anspruch 7 oder 8, **dadurch gekennzeichnet, daß** Polyacrylat oder Polyvinylpyrrolidon/Polyvinylacetat-Copolymer oder Polyvinylcaprolactam verwendet wird.

10. Verfahren nach einem der Ansprüche 7 bis 9, **dadurch gekennzeichnet, daß** die Beschichtung durch Waschen mit einem polaren organischen Lösungsmittel entfernt wird.

11. Verfahren nach Anspruch 10, **dadurch gekennzeichnet, daß** die Beschichtung durch Waschen mit Alkohol oder Keton oder Ester oder einer wäßrigen Lösung eines solchen Lösungsmittels entfernt wird.

12. Verfahren nach Anspruch 10, **dadurch gekennzeichnet, daß** die Beschichtung durch Waschen mit Isopropanol oder Ethanol oder eine wäßrige Lösung von Isopropanol oder Ethanol wieder abgelöst wird.

13. Verfahren nach einem der Ansprüche 1 bis 12, **dadurch gekennzeichnet, daß** die mindestens eine Polymerschicht unmittelbar nach der Herstellung des Glassubstrates auf demselben aufgebracht wird.

14. Verfahren nach einem der Ansprüche 1 bis 13, **dadurch gekennzeichnet, daß** die mindestens eine Polymerschicht durch Tauchen aufgetragen wird.

15. Verfahren nach einem der Ansprüche 1 bis 13, **dadurch gekennzeichnet, daß** die mindestens eine Polymerschicht durch Walzen aufgetragen wird.

16. Verfahren nach einem der Ansprüche 1 bis 13, **dadurch gekennzeichnet, daß** die mindestens eine Polymerschicht durch Sprühen aufgetragen wird.

17. Verfahren nach Anspruch 16, **dadurch gekennzeichnet, daß** die mindestens eine Polymerschicht im High Volume Low Pressure-(HVLP) Verfahren aufgesprüht wird.

18. Verfahren nach Anspruch 16 oder 17, **dadurch gekennzeichnet, daß** die mindestens eine Polymerschicht noch am Glaszug aufgesprüht wird.

19. Verfahren nach einem der Ansprüche 1 bis 18, **dadurch gekennzeichnet, daß** die mindestens eine Polymerschicht infrarotunterstützt getrocknet wird.

20. Verfahren nach einem der Ansprüche 1 bis 19, **dadurch gekennzeichnet, daß** die mindestens eine Polymerschicht in einem Heißluft-Schwebetrockner getrocknet wird.

21. Verfahren nach einem der Ansprüche 1 bis 20, **dadurch gekennzeichnet, daß** das Waschen ultraschallunterstützt wird.

22. Verfahren nach einem der Ansprüche 1 bis 21, **dadurch gekennzeichnet, daß** genau eine Polymerschicht aufgebracht wird.

23. Verfahren nach einem der Ansprüche 1 bis 21, **dadurch gekennzeichnet, daß** mindestens zwei Polymerschichten aufgetragen werden, die sich in ihrer Wasserlöslichkeit dahingehend unterscheiden, daß die direkt auf dem Glassubstrat aufgetragene Schicht löslicher ist als die darüberliegende Schicht.

24. Verfahren nach Anspruch 23, **dadurch gekennzeichnet, daß** zuerst eine Schicht aus Polyvinylalkohol auf das Glassubstrat und darüber eine Schicht aus einem in polaren organischen Lösungsmitteln lösliches Polymer aufgetragen wird.

25. Unpoliertes Displayglas, **dadurch gekennzeichnet, daß** es temporär mindestens eine wiederablösbare Polymerschicht aus Polyvinylalkohol mit einer mittleren Molekülmasse ≥ 55.000 g/mol und einem Hydrolysegrad ≥ 95 % aufweist, die sich in Wasser einer Temperatur ≥ 50°C auflöst, oder eine Polymerschicht mit einer Dicke von 1 bis 15 µm aufweist, die sich in einem polaren organischen Lösungmittel oder einer Mischung aus Wasser und polarem/n organischen Lösungsmittel/n auflöst.

26. Elektronisches Gerät, das Displayglas aufweist, **gekennzeichnet durch** unpoliertes Displayglas, das temporär mindestens eine wiederablösbare Polymerschicht aus Polyvinylalkohol mit einer mittleren Molekülmasse ≥ 55.000 g/mol und einem Hydrolysegrad ≥ 95 % aufweist, die sich in Wasser einer Temperatur ≥ 50°C auflöst, oder eine Polymerschicht mit einer Dicke von 1 bis 15 µm aufweist, die sich in einem polaren organischen Lösungmittel oder einer Mischung aus Wasser und polarem/n organischen Lösungsmittel/n auflöst.

27. Festplattensubstrat aus Glas oder Glaskeramik, **gekennzeichnet durch** ein unpoliertes Substrat, das temporär mindestens eine wiederablösbare Polymerschicht aus Polyvinylalkohol mit einer mittleren Molekülmasse ≥ 55.000 g/mol und einem Hydrolysegrad ≥ 95 % aufweist, die sich in Wasser einer Temperatur > 50°C auflöst, oder eine Polymerschicht aufweist, die sich in einem polaren organischen Lösungmittel oder einer Mischung aus Wasser und polarem/n organischen Lösungsmittel/n auflöst.

28. Festplattensubstrat aus Glas oder Glaskeramik, **dadurch gekennzeichnet, daß** es mindestens eine wiederablösbare Polymerschicht aus Polyvinylalkohol mit einer mittleren Molekülmasse ≥ 55.000 g/mol und einem Hydrolysegrad ≥ 95 % aufweist, die sich in Wasser einer Temperatur ≥ 50° C auflöst, oder eine Polymerschicht aufweist, die sich in einem polarem/n organischen Lösungsmittel/n auflöst.

29. Verwendung von Festplattensubstraten aus Glas oder Glaskeramik nach einem der Ansprüche 27 oder 28 als Rohling für Festplatten zum Einsatz in elektronischen Geräten.

## Claims

1. Method of applying a redetachable coating comprising at least one layer of polyvinyl alcohol to glass substrates, especially display glasses or hard disk substrates, as a protective layer, **characterized in that** the polyvinyl alcohol used has an average molecular weight ≥ 55 000 g/mol and a degree of hydrolysis ≥ 95%.

2. Method according to Claim 1, **characterized in that** the coating is redetached with water having a temperature T ≥ 50°C.

3. Method according to Claim 1 or 2, **characterized in that** the polyvinyl alcohol used has an average molecular weight ≥ 150 000 g/mol.

4. Method according to any one of Claims 1 to 3, **characterized in that** the polyvinyl alcohol used has a degree of hydrolysis ≥ 97.5%.

5. Method according to any one of Claims 1 to 4, **characterized in that** a 1 to 30% strength polyvinyl alcohol solution in water is used.

6. Method according to any one of Claims 1 to 5, **characterized in that** the at least one polymer layer is 0.1 to 100 µm in thickness.

7. Method of applying a redetachable coating comprising at least one layer of a polymer to display glasses or hard disk substrates as a protective layer, **characterized in that** the protective layer is applied in a thickness of 1 to 15 µm using a polymer which is redetachable by means of polar organic solvents.

8. Method according to Claim 7, **characterized in that** the polymer used is soluble in alcohols, ketones or esters.

9. Method according to Claim 7 or 8, **characterized in that** the polymer used is polyacrylate or polyvinylpyrrolidone-polyvinyl acetate copolymer or polyvinylcaprolactam.

10. Method according to any one of Claims 7 to 9, **characterized in that** the coating is removed by washing with a polar organic solvent.

11. Method according to Claim 10, **characterized in that** the coating is removed by washing with alcohol or ketone or ester or an aqueous solution of such a solvent.

12. Method according to Claim 10, **characterized in that** the coating is redetached by washing with isopropanol or ethanol or an aqueous solution of isopropanol or ethanol.

13. Method according to any one of Claims 1 to 12, **characterized in that** the at least one polymer layer is applied to the glass substrate immediately after the glass substrate has been produced.

14. Method according to any one of Claims 1 to 13, **characterized in that** the at least one polymer layer is applied by dipping.

15. Method according to any one of Claims 1 to 13, **characterized in that** the at least one polymer layer is applied by rolling.

16. Method according to any one of Claims 1 to 13, **characterized in that** the at least one polymer layer is applied by spraying.

17. Method according to Claim 16, **characterized in that** the at least one polymer layer is sprayed onto the glass substrate by the high volume low pressure (HVLP) process.

18. Method according to Claim 16 or 17, **characterized in that** the at least one polymer layer is applied by spraying at the glass-drawing stage.

19. Method according to any one of Claims 1 to 18, **characterized in that** the drying of the at least one polymer layer is infrared supported.

20. Method according to any one of Claims 1 to 19, **characterized in that** the at least one polymer layer is dried with hot air in a floating dryer.

21. Method according to any one of Claims 1 to 20, **characterized in that** the washing is ultrasound supported.

22. Method according to any one of Claims 1 to 21, **characterized in that** exactly one polymer layer is applied.

23. Method according to any one of Claims 1 to 21, **characterized in that** at least two polymer layers are applied that differ in water solubility **in that** the layer applied directly to the glass substrate is more soluble than the superior layer.

24. Method according to Claim 23, **characterized in that** first a layer of polyvinyl alcohol is applied to the glass substrate and atop that layer a layer of a polymer which is soluble in polar organic solvents is applied.

25. Unpolished display glass, **characterized in that** it temporarily comprises at least one redetachable polymer layer of polyvinyl alcohol having an average molecular weight ≥ 55 000 g/mol and a degree of hydrolysis ≥ 95% which is soluble in water having a temperature > 50°C or comprises a polymer layer 1 to 15 µm in thickness which is soluble in a polar organic solvent or a mixture of water and one or more polar organic solvents.

26. Electronic equipment including display glass, **characterized by** unpolished display glass which temporarily comprises at least one redetachable polymer layer of polyvinyl alcohol having an average molecular weight ≥ 55 000 g/mol and a degree of hydrolysis ≥ 95% which is soluble in water having a temperature > 50°C or comprises a polymer layer 1 to 15 µm in thickness which is soluble in a polar organic solvent or a mixture of water and one or more polar organic solvents.

27. Hard disk substrate made from glass or glass ceramic, **characterized by** an unpolished substrate characterized temporarily comprises at least one redetachable polymer layer of polyvinyl alcohol having an average molecular weight ≥ 55 000 g/mol and a degree of hydrolysis ≥ 95% which is soluble in water having a temperature ≥ 50°C or comprises a polymer layer which is soluble in a polar organic solvent or a mixture of water and one or more polar organic solvents.

28. Hard disk substrate made from glass or glass ceramic, **characterized in that** it comprises at least one redetachable polymer layer of polyvinyl alcohol having an average molecular weight ≥ 55 000 g/mol and a degree of hydrolysis ≥ 95% which is soluble in water having a temperature ≥ 50°C or comprises a polymer layer which is soluble in one or more polar organic solvents.

29. Use of hard disk substrates made from glass or glass ceramic according to either of Claims 27 and 28 as a blank for hard disks for use in electronic equipment.

## Revendications

1. Procédé d'application d'un revêtement enlevable à nouveau présentant au moins une couche de poly(alcool vinylique) sur des substrats de verre, en particulier des verres pour affichage ou des substrats pour disques durs, en tant que couche protectrice, **caractérisé en ce qu'**un poly(alcool vinylique) avec une masse moléculaire moyenne ≥ 55 000 g/mole et un degré d'hydrolyse ≥ 95% est utilisé.

2. Procédé selon la revendication 1, **caractérisé en ce que** le revêtement est enlevé à nouveau avec de l'eau ayant une température T ≥ 50°C.

3. Procédé selon la revendication 1 ou 2, **caractérisé en ce qu'**un poly(alcool vinylique) présentant une masse moléculaire moyenne ≥ 150 000 g/mole est utilisé.

4. Procédé selon l'une quelconque des revendications 1 à 3, **caractérisé en ce qu'**un poly(alcool vinylique) présentant un degré d'hydrolyse ≥ 97,5% est utilisé.

5. Procédé selon l'une quelconque des revendications 1 à 4, **caractérisé en ce qu'**une solution de poly(alcool vinylique) à 1 jusqu'à 30% dans de l'eau est utilisée.

6. Procédé selon l'une quelconque des revendications 1 à 5, **caractérisé en ce que** ladite au moins une couche polymère présente une épaisseur de 0,1 à 100 µm.

7. Procédé d'application d'un revêtement enlevable à nouveau présentant au moins une couche d'un polymère sur des verres pour affichage ou sur des substrats pour disques durs en tant que couche protectrice, **caractérisé en ce que** la couche protectrice est appliquée en une épaisseur de 1 à 15 µm, un polymère étant utilisé pour la couche protectrice, lequel peut être enlevé à nouveau au moyen d'un solvant organique polaire.

8. Procédé selon la revendication 7, **caractérisé en ce qu'**un polymère est utilisé qui est soluble dans des alcools, cétones ou esters.

9. Procédé selon la revendication 7 ou 8, **caractérisé en ce qu'**un polyacrylate ou un copolymère de poly(acétate de vinyle) et de polyvinylpyrrolidone ou un polyvinylcaprolactam est utilisé.

10. Procédé selon l'une quelconque des revendications 7 à 9, **caractérisé en ce que** le revêtement est éliminé par lavage avec un solvant organique polaire.

11. Procédé selon la revendication 10, **caractérisé en ce que** le revêtement est éliminé par lavage avec un alcool ou une cétone ou un ester ou avec une solution aqueuse d'un tel solvant.

12. Procédé selon la revendication 10, **caractérisé en ce que** le revêtement est enlevé à nouveau par lavage à l'isopropanol ou à l'éthanol ou avec une solution aqueuse d'isopropranol ou d'éthanol.

13. Procédé selon l'une quelconque des revendications 1 à 12, **caractérisé en ce que** ladite au moins une couche de polymère est appliquée immédiatement après la fabrication du substrat en verre sur celui-ci.

14. Procédé selon l'une quelconque des revendications 1 à 13, **caractérisé en ce que** ladite au moins une couche de polymère est appliquée-par immersion.

15. Procédé selon l'une quelconque des revendications 1 à 13, **caractérisé en ce que** ladite au moins une couche de polymère est appliquée au rouleau.

16. Procédé selon l'une quelconque des revendications 1 à 13, **caractérisé en ce que** ladite au moins une couche de polymère est appliquée par projection.

17. Procédé selon la revendication 16, **caractérisé en ce que** ladite au moins une couche de polymère est appliquée par projection selon le procédé à haut volume et à basse pression volume (HVLP).

18. Procédé selon la revendication 16 ou 17, **caractérisé en ce que** ladite au moins une couche de polymère est appliquée par projection lors même de l'étirage du verre.

19. Procédé selon l'une quelconque des revendications 1 à 18, **caractérisé en ce que** ladite au moins une couche de polymère est séchée à l'aide de rayons infrarouges.

20. Procédé selon l'une quelconque des revendications 1 à 19, **caractérisé en ce que** ladite au moins une couche de polymère est séchée dans un sécheur à coussin d'air chaud.

21. Procédé selon l'une quelconque des revendications 1 à 20, **caractérisé en ce que** le lavage est effectué à l'aide d'ultrasons.

22. Procédé selon l'une quelconque des revendications 1 à 21, **caractérisé en ce que** juste une couche de polymère est appliquée.

23. Procédé selon l'une quelconque des revendications 1 à 21, **caractérisé en ce qu'**au moins deux couches de polymères sont appliquées qui se distinguent par leur solubilité dans l'eau en ce sens que la couche appliquée directement sur le substrat de verre est plus soluble que la couche se trouvant dessus.

24. Procédé selon la revendication 23, **caractérisé en ce que** d'abord une couche de poly(alcool vinylique) est appliquée sur le substrat de verre et **en ce qu'**une couche de polymère soluble dans des solvants organiques est appliquée là-dessus.

25. Verre d'affichage non poli, **caractérisé en ce qu'**il présente temporairement au moins une couche de polymère enlevable à nouveau constituée d'un poly(alcool vinylique) ayant une masse moléculaire moyenne ≥ 55 000 g/mole et un degré d'hydrolyse ≥ 95%, ladite au moins une couche se dissolvant dans de l'eau à une température ≥ 50°C, ou **en ce qu'**il présente une couche de polymère avec une épaisseur de 1 à 15 µm qui se dissout dans un solvant organique polaire ou dans un mélange d'eau et de solvant(s) organique(s) polaire(s).

26. Appareil électronique présentant un verre pour affichage, **caractérisé par** un verre pour affichage non poli qui présente temporairement au moins une couche de polymère enlevable à nouveau constituée d'un poly(alcool vinylique) ayant une masse moléculaire moyenne ≥ 55 000 g/mole et un degré d'hydrolyse ≥ 95%, ladite au moins une couche se dissolvant dans de l'eau à une température ≥ 50°C, ou qui présente une couche de polymère avec une épaisseur de 1 à 15 µm laquelle se dissout dans un solvant organique polaire ou dans un mélange d'eau et de solvant(s) organique(s) polaire(s).

27. Substrat pour disque dur en verre ou en vitrocéramique, **caractérisé par** un substrat non poli qui présente temporairement au moins une couche de polymère enlevable à nouveau constituée d'un poly(alcool vinylique) ayant une masse moléculaire moyenne ≥ 55 000 g/mole et un degré d'hydrolyse ≥ 95%, ladite au moins une couche se dissolvant dans de l'eau à une température ≥ 50°C, ou qui présente une couche de polymère qui se dissout dans un solvant organique polaire ou dans un mélange d'eau et de solvant(s) organique(s) polaire(s).

28. Substrat pour disque dur en verre ou en vitrocéramique, **caractérisé en ce qu'**il présente au moins une couche de polymère enlevable à nouveau constituée d'un poly(alcool vinylique) ayant une masse moléculaire moyenne ≥ 55 000 g/mole et un degré d'hydrolyse ≥ 95%, ladite au moins une couche se dissolvant dans de l'eau à une température ≥ 50°C, ou **en ce qu'**il présente une couche de polymère qui se dissout dans un(des) solvant(s) organique(s) polaire(s).

29. Utilisation de substrats pour disques durs en verre ou en vitrocéramique selon l'une quelconque des revendications 27 ou 28 en tant qu'ébauche pour disques durs destinés à être employés dans des appareils électroniques.
